# EUROPÄISCHE PATENTSCHRIFT

(11) **EP 0 965 857 B1**
(45) Veröffentlichungstag und Bekanntmachung des Hinweises auf die Patenterteilung: **10.01.2007**
(21) Anmeldenummer: 99109416.0
(22) Anmeldetag: 11.05.1999
(51) Int. Cl.: G01S 5/02, G01S 13/87, G06K 7/00, G06K 19/07, G08B 13/24

(54) **Verfahren zum Detektieren eines oder mehrerer Transponder sowie Anordnung und Verwendung einer solchen Anordnung**
Method and apparatus for detecting one or more transponders
Procédé et dispositif pour détecter un ou plusieurs transpondeurs

(30) Priorität: 02.06.1998 DE 19824528
(43) Veröffentlichungstag der Anmeldung: 22.12.1999
(73) Patentinhaber: Stobbe, Anatoli, 30890 Barsinghausen (DE)
(72) Erfinder: Stobbe, Anatoli, 30890 Barsinghausen (DE); Merk, Holger, 30890 Barsinghausen (DE)
(74) Vertreter: Schröter, Martin

(56) Entgegenhaltungen:
- US-A- 5 568 119
- US-A- 5 648 761

## Beschreibung

Die Erfindung bezieht sich auf das Gebiet des Detektierens von einem oder von mehreren Transpondern in einem vorbestimmten Detektionsbereich. In diesem technischen Gebiet betrifft die Erfindung insbesondere ein Verfahren zum Detektieren eines oder mehrerer Transponder in einem durch zumindest zwei Zellen gegliederten Detektionsbereich, in dem ein Transponder zellenbezogen detektierbar ist sowie eine Anordnung zum Detektieren eines oder mehrerer Transponder in einem vorbestimmten Detektionsbereich und eine bevorzugte Verwendung einer solchen Anordnung.

Ein Verfahren zur Positionsbestimmung eines in einem bestimmten Netz als bekannt registrierten als Transponders bezeichneten Mobiltelefons wird beispielsweise beim Netzbetrieb der GSM-Mobiltelefone verwendet. Das Sendegebiet des Netzbetreibers - der Detektionsbereich - ist in einzelne Zellen unterteilt. Jeder Zelle ist eine Sende-Empfangseinheit (Feststation) zugeordnet, über die der Telefonbetrieb in dieser Zelle auf einer dieser Zelle eigenen Frequenz abgewickelt wird. Jede Zelle unterscheidet sich somit bezüglich der Frequenz von den benachbarten Zellen. Bei Inbetriebnahme eines Mobiltelefons in einer solchen Zelle wir dieses durch Senden seiner Identität netzseitig identifiziert, so daß mit Hilfe dieser Identifikation und dem Wissen, welche Feststation diese Identifikation aufgenommen hat, bestimmbar ist, in welcher Zelle des Detektionsbereiches sich dieses Mobiltelefon aufhält. Begibt sich der Mobilfunkteilnehmer mit seinem sende- bzw. empfangsbereiten Mobiltelefon über die Grenze einer solchen Zelle hinweg und tritt in die nächste benachbarte Zelle ein, werden seine Identifikationsdaten von einer anderen Feststation empfangen, so daß netzseitig bestimmbar ist, daß sich dieses Mobiltelefon nunmehr in dieser benachbarten Zelle befindet. Durch eine gewünschte Überlappung der Zellen wechselt ein Mobiltelefon jedoch nicht an der eigentlichen Zellengrenze seine Frequenz, sondern erst dann, wenn es tatsächlich bereits innerhalb der benachbarten Zelle ist. Durch zeitlich rekursives Vergleichen der Mobiltelefonstellungen läßt sich im Nachhinein die durchgeführte Bewegung nachvollziehen. Zur Durchführung eines solchen Verfahrens ist es daher notwendig, daß das Mobiltelefon auf sämtlichen, von dem Netzbetreiber zur Verfügung gestellten Frequenzen arbeiten kann. Dies bedingt einen nicht unerheblichen apparativen Aufwand.

Die Kommunikation zwischen einem Mobiltelefon und der Feststation einer solchen Zelle erfolgt auf hochfrequenten Frequenzen. Durch wechselnde Ausrichtungen der Antennen zwischen dem Mobiltelefon und einer einer Zelle zugeordneten Feststation, durch umgebungsbedingte Abschattungen, Reflektionen sowie unterschiedliche Wetterbedingungen weicht der tatsächliche Verlauf der Zellengrenzen jedoch oftmals erheblich von den theoretischen Zellengrenzen ab. Die nicht beeinflußbaren Faktoren, beispielsweise unterschiedliche, sich kontinuierlich ändernde Wetterbedingungen führen zudem dazu, daß sich die Zellengrenzen ständig verändern. Befindet sich ein Mobiltelefon im Randbereich einer ersten Zelle, so kann die Kommunikation unbeeinflußbar wechselnd mit der Feststation der ersten Zelle und mit der Feststation der benachbarten Zelle erfolgen. Dies suggeriert ein tatsächlich nicht vorhandenes Hin- und Herwandem des Mobiltelefons von der einen Zelle in die andere und zurück. Die Positionsdetektion entspricht dann nicht der tatsächlichen Position.

Es gibt Anwendungen, bei denen eine möglichst genaue Detektion des Übergangs eines Transponders von einer Zelle in eine benachbarte Zelle erfaßt werden muß.

US 5,568,119 beschreibt ein Verfahren zum Überwachen der Position einer Person. Zu diesem Zweck trägt die Person eine Positionsbestimmungseinheit, durch die die jeweilige geografische Position ermittelbar ist. Diese Einheit steht in Funkverbindung mit einer oder mehreren Sende-Empfangsstationen. Der überwachten Person können bestimmte Bereiche zugeordnet werden, in denen sich die Person bewegen darf. Durch zyklische Abfragen der Positionierungseinrichtung erfolgt die Überwachung.

US 5,648,761 beschreibt ein berührungsfreies Kartenleseverfahren unter Ausnutzung des Stereoeffektes. Hierzu ist es notwendig, dass die Karte in einer ganz bestimmten Ausrichtung zu den beiden Sende-Empfangseinrichtungen angeordnet ist.

Weder das in US 5,568,119, noch das in US 5,648,761 beschriebene Verfahren eignen sich jedoch dazu, dass bei sich überlappenden Feldern des eingangs genannten Standes der Technik eine höhere Auflösung reicht werden könnte.

Der Erfindung liegt daher ausgehend von dem eingangs diskutierten Stand der Technik (US 5,568,119) die Aufgabe zugrunde ein Verfahren zum Detektieren eines oder mehrerer Transponders in einem durch zumindest zwei Zellen gegliederten Detektionsbereich vorzuschlagen, gemäß dem der Übergang des Transponders von einer ersten Zelle in eine zweite Zelle verbessert ist. Ferner liegt der Erfindung die Aufgabe zugrunde, eine entsprechende Anordnung sowie eine bevorzugte Verwendung einer solchen Anordnung bereitzustellen.

Die verfahrensbezogene Aufgabe wird erfindungsgemäß durch ein Verfahren mit den Merkmalen des Anspruchs 1 gelöst.

Die anordnungsbezogene Aufgabe wird erfindungsgemäß durch eine Anordnung mit den Merkmalen des Anspruchs 10 gelöst.

Das erfindungsgemäße Verfahren verwendet Zellen, die sich bereichsweise überlappen und somit einen Überlappungsbereich aufweisen. In jeder Zelle, wobei im folgenden der vereinfachten Erläuterung halber das Verfahren an der Grenze zweiter benachbarter Zellen dargelegt wird, wird ein Feld, beispielsweise magnetischer oder elektromagnetischer Art bereitgestellt, welche Felder gleichartig ausgebildet sind und eine detektierbare Feldcharakteristik aufweisen, sich etwa durch unterschiedliche Phasenlage unterscheiden. Bei einer solchen Feldcharakteristik braucht lediglich eine Frequenz bereitgestellt werden. Die Feldcharakteristik in jeder Zelle ist somit bekannt. Diese Feldcharakteristik wird von einem Transponder mit einer ihm zugeordneten Aufnahmeeinheit erfaßt. Der Transponder ist zum zyklischen Aussenden von Antwortsignalen ausgelegt, wobei die Antwortsignale Informationen zur erfaßten Feldcharakteristik des in einer Zelle befindlichen Feldes beinhalten. Der Empfang dieses Antwortsignales gibt zu erkennen, daß sich ein Transponder in dem Feld bzw. in der Zelle mit dieser Feldcharakteristik befindet. Nunmehr wird die Felderzeugungseinrichtung der benachbarten zweiten Zelle so angesteuert, daß die zu detektierende Feldcharakteristik des Feldes in dieser Zelle unterschiedlich ist zu der Feldcharakteristik des Feldes in der ersten Zelle. In dem Überlappungsbereich überlagern sich die beiden Felder der benachbarten Zellen, so daß sich darin eine dritte, sich von den Feldcharakteristika der Felder der angrenzenden Zellen unterscheidende Feldcharakteristik ausbildet. Im Gegensatz zu dem bekannten Detektionsverfahren wird hier die sich überlagernden Feldcharakteristika als Positionsinformation ausgenutzt. Eine solche Überlagerung kann beispielsweise auch eine Auslöschung sein. Diese Überlagerungsbereiche bilden eine räumlich scharfe Grenze zu den angrenzenden Feldern bzw. Zellen aus, so daß eine höhere Ortsauflösung verglichen mit vorbekannten Verfahren zum Erkennen von Transpondern möglich ist. Wird der Transponder aus der ersten Zelle in den Überlappungsbereich und anschließend in die benachbarte zweite Zelle gebracht, sendet der Transponder zunächst die Feldcharakteristik der ersten Zelle wiedergebende Antwortsignale, anschließend, wenn sich dieser im Überlappungsbereich befindet, Antwortsignale, die weder der einen noch der anderen Zelle zuzuordnen sind und bei Eintreten in die zweite Zelle solche Antwortsignale, die der Feldcharakteristik der zweiten Zelle entsprechen. Die in jedem Antwortsignal empfangene Information wird verifiziert, beispielsweise wird diese mit derjenigen des zuvor empfangenen Antwortsignales verglichen. Ist die Information zwischen zwei aufeinander folgenden Antwortsignalen gleich, befindet sich der Transponder nach wie vor innerhalb derselben Zelle bzw. innerhalb desselben Zellbereiches oder auch in dem Überlappungsbereich. Da die Feldcharakteristika sowohl der ersten Zelle als auch der zweiten Zelle bekannt sind, befindet sich der Transponder dann eindeutig in der zweiten Zelle, wenn dieser nach Senden von Antwortsignalen mit der für den Überlappungsbereich charakteristischen Information mehrfach Antwortsignale mit der für die Feldcharakteristik der zweiten Zelle bestimmungsgemäßen Information gesendet hat. Somit ist auch der Übergang des Transponders von der ersten Zelle in die zweite Zelle detektierbar. Zweckmäßigerweise erfolgt die Ausgabe eines Steuersignals, darstellend, daß der Transponder sich in der zweiten Zelle befindet, erst nach wiederholtem Empfangen des für die Feldcharakteristik der zweiten Zelle typischen Antwortsignales, wobei die Anzahl des wiederholten Empfangens vorbestimmt ist.

Das erfindungsgemäße Verfahren, entsprechend auch die erfindungsgemäße Anordnung läßt sich bevorzugt in Detektionsbereichen kleinerer Größenordnung verwirklichen, wobei eine bevorzugte Verwendung einer solchen Anordnung dazu vorgesehen ist, als Warensicherungsetikett dienender Transponder im Ausgangsbereich eines Gebäudes ortsaufgelöst zu detektieren, um zu erfassen, in welchem Zeitpunkt sich ein Transponder tatsächlich außerhalb des Gebäudes befindet. Derartige Informationen sind wesentlich, wenn die Transponder als Warensicherungsetiketten zur Sicherung von in dem Gebäude befindlichen Waren im Rahmen eines Diebstahl-Sicherungssystems eingesetzt werden. In einem solchen Fall befindet sich die erste Zelle des Detektionsbereiches im Gebäudeinneren und die zweite Zelle außerhalb des Gebäudes; der Überlappungsbereich ist den Türbereich des Gebäudes abdeckend angeordnet. Durch unterschiedliche Feldstärke der beiden benachbarten Felder ist der Überlappungsbereich an die jeweiligen Umstände anpaßbar.

In einem Ausführungsbeispiel ist vorgesehen, daß die Felder in den benachbarten Zellen durch eine niederfrequente elektromagnetische, in den Zellen gleichfrequente und synchrone Strahlung gebildet wird. Als detektierbares Feldcharakteristikum wird die Phasenlage eines Feldes in einer Zelle verwendet, so daß bei einer Feldeinstellung, bei der benachbarte Zellen bezüglich ihrer Feldcharakteristika unterschiedliche Felder beinhalten, sich diese Felder bezüglich ihrer Phasenlage unterscheiden. Es ist dann von dem Transponder ein Phasensprung zwischen der Phasenlage des ersten Feldes und derjenigen des zweiten Feldes detektierbar. Besonders bevorzugt ist eine Ausgestaltung, bei der die Phasenlage von Feldern benachbarter Zellen um 180° versetzt zueinander sind. In diesem Fall ist der Überlappungsbereich durch eine Feldauslöschung gekennzeichnet, in welchem Bereich somit keine Phasenlage erkannt werden kann. Von einem Transponder können dann drei Phasenlagen erkannt werden: "*Phasenlage 0*°", "*Phasenlage 180*°" oder "*Phasenlage unbekannt*"*.* Die um 180° zueinander versetzte Phasenlage dieser beiden sich überlappenden Felder bedingt, daß sich der Auslöschungsbereich sehr scharf von den eigentlichen Zellenbereichen in Bezug auf eine Detektion der diesen Zellen eigenen Phasenlage abbildet. Der Grenzbereich zwischen dem eigentlichen Zellbereich und dem Überlappungsbereich beträgt nur wenige Zentimeter. Daher kann bei entsprechend dimensioniertem Überlappungsbereich sehr exakt festgestellt werden, wann ein Transponder aus dem Überlappungsbereich in den eigentlichen Zellbereich einer angrenzenden Zelle hinein bewegt wird. Wird eine solche Anordnung im Rahmen eines oben bezeichneten Diebstahl-Sicherungssystems eingesetzt, läßt sich die Gebäudegrenze durch entsprechende Dimensionierung des Überlappungsbereiches so einrichten, daß ein Alarm nach gesicherter Feststellung, daß ein Transponder sich außerhalb des Gebäudes befindet, bereits in einem Zeitpunkt ausgelöst werden, in dem der Transponder gerade erst unmittelbar außerhalb vor der Gebäudetür befindet.

Bei einem Einsatz einer solchen Anordnung im Rahmen eines solchen Diebstahl-Sicherungssystems ist es zweckmäßig, dem ortsaufgelösten Detektionsverfahren der Transponder ein Antikollision- und Identifikationsverfahren vorzuschalten. Herkömmlich endet ein solcher Antikollisions- und Identifikationsalgorythmus damit, daß der Transponder in einen Ruhemodus gebracht wird. Ist einem Antikollisions- und Identifikationsverfahren ein solches ortsaufgelöstes Detektionsverfahren zeitlich nachgeschaltet, ist es zweckmäßig, die Transponder nicht in den Schlafmodus nach erfolgter Kommunikation zu bringen, sondern diese in den Detektionsmodus umzuschalten.

Auch bei den beschriebenen ortsaufgelösten Detektionsverfahren kann der Fall eintreten, daß durch bestimmte Raumlagen der Transponderantenne beim Hindurchführen des Transponders durch die Zellen, insbesondere in der Nähe des Überlappungsbereiches die Feldcharakteristik eines NF-Senders detektiert wird, welche Feldcharakteristik unterschiedlich ist zu derjenigen, in dessen Zelle sich der Transponder tatsächlich befindet. In diesen Fällen wird von dem Transponder eine unbekannte oder falsche Feldcharakteristik detektiert, obwohl sich der Transponder tatsächlich nicht im Überlappungsbereich befindet. Zur Vermeidung dieser Fälle ist jede Zelle in zwei oder mehr Unterzellen unterteilt. Jedes Unterzelle weist eine eigene Felderzeugungseinrichtung, etwa einen NF-Sender, auf. Es ist dann möglich, eine Zelle im Rahmen seiner Unterzellen durch Beaufschlagung der Unterzellen mit Feldern unterschiedlicher Feldcharakteristika ortsaufgelöst zu unterteilen. Bei einem Einsatz von NF-Sendern ist vorgesehen, daß die Felder der Unterzellen einer Zelle zunächst gleichfrequent, synchron und phasengleich bereitgestellt werden und daß erst, wenn von dem Transponder ein Antwortsignal mit einer ersten Phasenlage empfangen wird, die Felder benachbarter Unterzellen unterschiedliche Feldcharakteristika, etwa Phasenlagen aufweisen. Die Feldcharakteristika der Unterzellen werden dann zwischen einer Bereitstellung von phasengleichen und phasenunterschiedlichen Unterzellen hin und her geschaltet. Ein bestimmungsgemäß lokalisierter Transponder würde durch das von ihm gesendete Antwortsignal wiederholt derselben Feldcharakteristik bzw. derselben Unterzelle zugeordnet werden können. Ein Transponder, der mit jeder Umschaltung des Zellenbetriebes wechselnde Positionen einnimmt, welcher Wechselbetrieb im Millisekunden-Bereich toggelt, wird zunächst als nicht eindeutig detektierbar eingestuft. Da ein solcher Transponder jedoch bewegt wird, bewegt sich dieser unweigerlich auch in einen Zellen- bzw. Unterzellenbereich, in dem dieser bestimmungsgemäß detektierbar ist.

Bei einem Einsatz von NF-Sendern zum Bereitstellen von elektromagnetischen Felder eignen sich insbesondere Frequenzen zwischen 1 kHz und einigen hundert kHz. Zur Übertragung der Antwortsignale der Transponder wird zweckmäßigerweise eine HF-Strecke verwendet, die beispielsweise 433 MHz betragen kann.

Weitere Vorteile der Erfindungen sowie weitere Ausgestaltungen sind Bestandteil der übrigen Unteransprüche sowie der nachfolgenden Beschreibung eines Ausführungsbeispieles unter Bezugnahme auf die beigefügten Figuren. Es zeigen:
- **Fig. 1**: eine schematisierte Darstellung einer Anordnung zum ortsaufgelösten Detektieren eines oder mehrerer Transponder im Türbereich eines Gebäudes,
- **Fig. 2**: in einer vereinfachten Darstellung der Figur 1 die Ausbildung von zwei Zellen mit gerichteten Feldern beim Senden phasengleicher Signale,
- **Fig. 3**: eine Darstellung entsprechend Figur 2, bei dem eines der beiden gerichteten Felder mit einer um 180° zur anderen Zelle versetzten Phase beaufschlagt ist,
- **Fig. 4**: eine Unterteilung der beiden Zellen in jeweils zwei Unterzellen durch Beaufschlagen der beiden in einer Zelle befindlichen NF-Sender mit phasenunterschiedlichen Signalen und
- **Fig. 5**: eine Darstellung entsprechend Figur 4, bei der die Phasenlage in jeder Unterzelle um 180° zur Phasenlage zu zwei benachbarten Unterzellen ist.

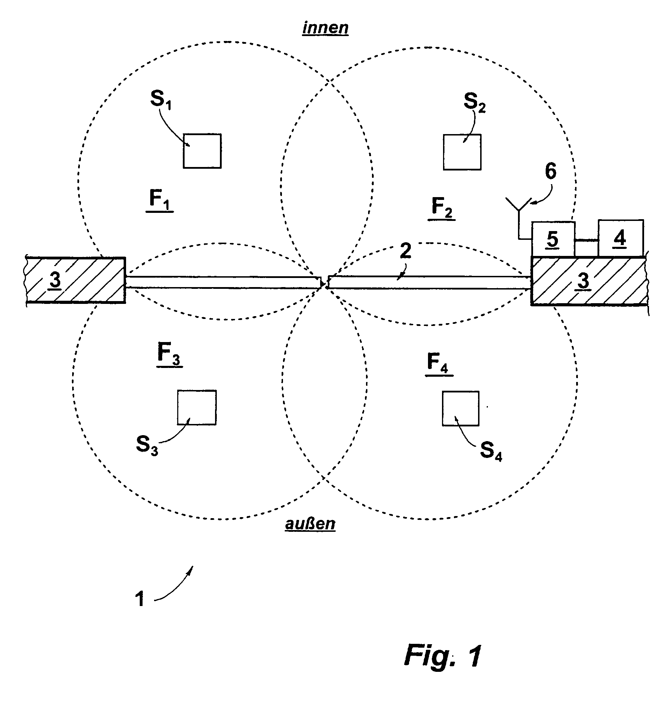

Eine in Figur 1 gezeigte Anordnung 1 zum ortsaufgelösten Detektieren eines oder mehrerer Transponder dient zur Absicherung einer Schiebetür 2, die den Ausgang eines nicht näher dargestellten Gebäudes bildet. Die Schiebetür 2 grenzt an eine Gebäudewand 3 und öffnet sich beim Näherkommen einer Person selbsttätig. Das Gebäudeinnere ist durch die Bezeichnung "*innen*" und der Bereich außerhalb des Gebäudes durch die Bezeichnung "*außen*" in den Figuren gekennzeichnet. Die Anordnung 1 umfaßt eine Steuer- und Speichereinrichtung 4, an die vier im Niederfrequenzbereich arbeitende Sender S₁ - S₄ angeschlossen sind. Die beiden NF-Sender S₁ und S₂ befinden sich im Gebäudeinneren; die beiden NF-Sender S₃ und S₄ befinden sich außerhalb des Gebäudes. Die NF-Sender können beispielsweise unterhalb einer Decke bzw. unterhalb einer Türüberdachung angeordnet sein. Die Sendebereiche - im folgenden auch als Felder bezeichnet - sind mit den Bezugszeichen F₁ - F₄ gekennzeichnet. Der Sendebereich F₁ - F₄ eines NF-Senders S₁ - S₄ ist etwa kugelförmig von den an der Deckenunterseite angeordneten NF-Sendern S₁ - S₄ ausgebildet. Projiziert auf die Ebene des Fußbodens des Gebäudes und den davor befindlichen Außenbereich sind die Sendebereiche F₁ - F₄ somit schematisiert als Kreisflächen dargestellt. Aus der Anordnung der Sendebereiche F₁ - F₄ wird deutlich, daß sich diese gegenseitig überlappen. Die Sendebereiche F₁ - F₄ stellen Zellen bzw. Unterzellen des Detektionsbereiches der Anordnung 1 dar.

Die Steuereinrichtung 4 dient zum Beaufschlagen der NF-Sender S₁ - S₄ mit vorbestimmten Sendesignalen, wobei alle NF-Sender S₁ - S₄ gleichfrequent und synchron dasselbe Signal senden. Es ist vorgesehen, daß die Sendesignale zyklisch gesendet werden. An die Steuer- und Speichereinrichtung 4 ist ferner eine im Hochfrequenzbereich arbeitende Empfangseinheit 5 angeschlossen, dessen HF-Empfangsantenne 6 dergestalt innerhalb des Detektionsbereiches der Anordnung 1 angeordnet ist, daß von einem Transponder gesendete Antwortsignale auf dieser HF-Strecke von der HF-Empfangsantenne 6 empfangbar sind.

Ein mit der Anordnung 1 zusammenwirkender, nicht näher dargestellter Transponder, der als Warensicherungsetikett an einem in dem Gebäude befindlichen Artikel angebracht ist, umfaßt eine im Niederfrequenzbereich arbeitende Empfangseinheit sowie einen Hochfrequenzsender zum Senden von Antwortsignalen auf der HF-Strecke der Empfangseinheit 5. Die NF-Empfangseinheit des Transponders dient insbesondere dazu, um den Transponder bei Eintreten in den Detektionsbereich aus einem Schlafmodus in einen Arbeitsmodus zu schalten - ihn somit zu wecken - und um anschließend eine Kommunikation mit der Steuer- und Speichereinrichtung durchführen zu können. Diese Kommunikation kann ebenfalls auf einer HF-Strecke vollzogen werden, wenn größere Datenmengen zu übertragen sind. Diese Einrichtungen des Transponders dienen zur Verwirklichung eines Antikollisions- und Identifikationsverfahrens mit der Steuer- und Speichereinrichtung. Der Transponder weist ferner eine Aufnahmeeinheit zum Erfassen der Feldcharakteristika bzw. der Feldcharakteristikaunterschiede auf.

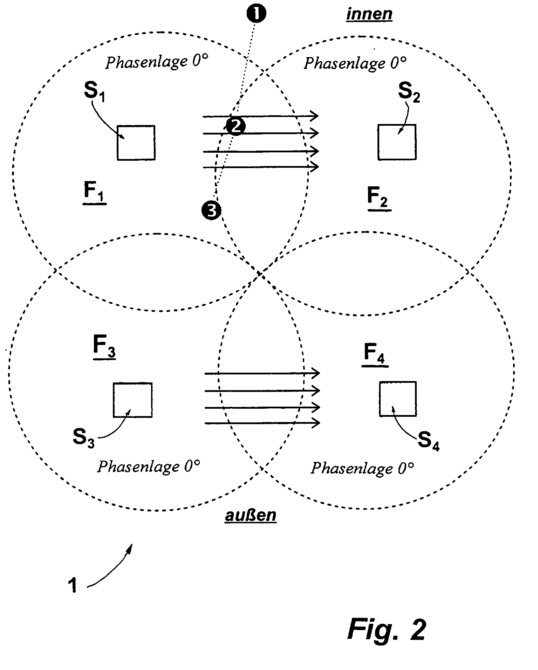

In den nachfolgend beschriebenen Figuren 2 - 5 ist der Übersicht halber lediglich der Detektionsbereich der Anordnung 1 mit unterschiedlich ausgestalteten Feldern F₁ - F₄ bei einer Detektion eines Transponders dargestellt. Dabei ist der Detektionsbereich der Anordnung 1 in eine innenliegende und eine außenliegende Detektionszelle unterteilt. Die innenliegende Detektionszelle wird durch den Sendebereich F₁ und F₂ der beiden NF-Sender S₁ und S₂ und der außenliegenden Detektionsbereich durch die Sendebereiche F₃ und F₄ der NF-Sender S₃ und S₄ gebildet. Ein nicht näher dargestellter Transponder befindet sich in einer Ausgangsstellung im Gebäudeinneren und wird an den Detektionsbereich der Anordnung 1 herangeführt; er befindet sich in dem dargestellten Ausführungsbeispiel an der Position 1. Die Bahn, auf der der Transponder bewegt wird, ist punktiert in den Figuren angegeben. Von dieser Position 1 gelangt der Transponder in das Feld F₁, in dem er einem vorgegebenen Algorythmus folgend identifiziert und anschließend in den Detektionsmodus geschaltet wird. In dem Detektionsmodus wird der Transponder dann zum Gebäudeausgang hin bewegt befindet und sich beispielsweise an der Position 2.

Die NF-Sender S₁ und S₂ sind von der Steuer- und Speichereinrichtung 4 so angesteuert, daß diese zyklisch ein gleichfrequentes, synchrones und phasengleiches Signal senden. Folglich entstehen die Feldern F₁ und F₂ und bilden in der innenliegenden Detektionszelle ein gerichtetes Feld. Der im Detektionsmodus befindliche Transponder erfaßt mit der ihm zugeordneten Aufnahmeeinheit dieses Signal ("*Phasenlage 0°*"*,* "*Phasenlage 180°*" oder "*Phasenlage unbekannt*") und sendet auf der HF-Strecke ein diese Information beinhaltendes Antwortsignal an die Empfangseinheit 5. Durch das empfangene Antwortsignal registriert die Steuer- und Speichereinrichtung 4, daß sich ein Transponder in der ersten Zelle befindet. Zur ortsaufgelösten Detektion mehrerer Transponder erfolgt eine Zeitschlitz gesteuerte Verarbeitung der von den einzelnen Transpondern gesendeten Antwortsignale, wobei jedem Transponder ein eigener Zeitschlitz zur Durchführung des ortsaufgelösten Detektionsverfahrens zugeordnet wird.

Das von dem Transponder gesendete Antwortsignal ist als Impuls oder Impulsfolge ausgebildet. Die Impulse unterscheiden sich zur Übermittlung der unterschiedlichen Antwortinformationen hinsichtlich ihrer Länge und/oder hinsichtlich ihrer Impulsfolge. Da die Antwortsignalinformation lediglich drei Zustände beinhalten muß, nämlich den Zustand "*Phasenlage 0*°", "*Phasenlage 180°*" oder "*Phasenlage unbekannt*" braucht der für das Antwortsignal eines Transponders vorgesehene Zeitschlitz nur sehr kurz bemessen zu sein, so daß auch die Antwortsignale zahlreicher Transponder in ihren jeweiligen Zeitschlitzen nacheinander folgend in kurzer Zeit erfaßbar sind.

In der Steuer- und Speichereinrichtung 4 werden die Antwortsignale eines Transponders bis in eine vorbestimmte zeitliche Tiefe gespeichert, so daß ein Vergleich der Information eines empfangenen Antwortsignales mit denjenigen zuvor empfangenen Antwortsignalen dieses Transponders verglichen werden können. Dies erlaubt eine Detektionsverifizierung dahingehend, daß ein Transponder, der mehrfach dasselbe Antwortsignal sendet, eindeutig bezüglich seiner Lage detektierbar ist. In dem dargestellten Ausführungsbeispiel steht im Vordergrund, festzustellen, wann der Transponder die Schiebetür 2 passiert hat und sich somit in der durch die Felder F₃ und F₄ gebildeten außerhalb des Gebäudes befindlichen Detektionszelle befindet.

Beim Bewegen des Transponders von seiner Position 2 in seine Position 3 - wie in Figur 2 gezeigt - wird der Transponder jeweils gleiche Antwortsignalinformationen senden, nämlich daß auf diesem Wege im Rahmen der zyklischen Abfrage kein Phasensprung detektiert worden ist.

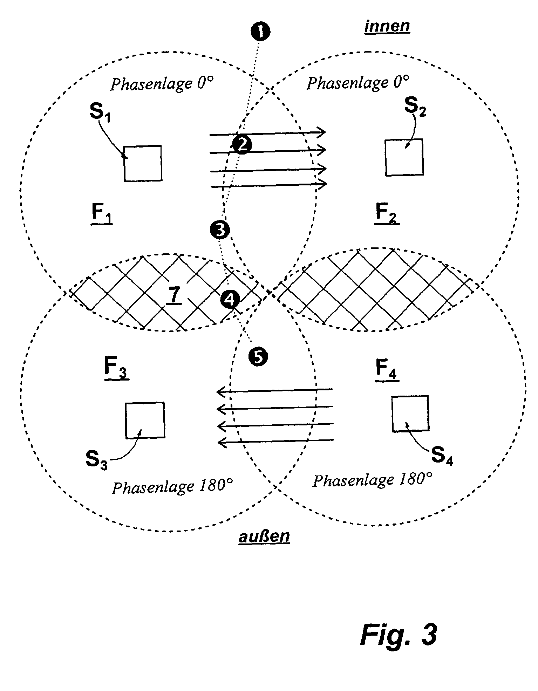

Wenn der Steuer- und Speichereinrichtung 4 das Vorhandensein eines Transponders in der durch die Felder F₁ und F₂ gebildeten Zelle detektiert hat, werden die NF-Sender S₃ und S₄ zum Senden eines mit den Sendern S₁ und S₂ gleichfrequenten und synchronen, jedoch zu diesen bezüglich der Phasenlage des Sendesignales um 180° versetztes Sendesignal geschaltet (vgl. Figur 3). In der außenliegenden Zelle wird somit ein gerichtetes Feld bereitgestellt, welches bezüglich seiner Phasenlage um 180° zur Phasenlage der Sendesignale in der innenliegenden Zelle versetzt ist.

Durch die um 180° versetzte Phasenlage der beiden gerichteten Felder entsteht im Überlappungsbereich der beiden Zellen eine Auslöschungszone 7, in der keine Phasenlage von der dem Transponder zugeordneten Aufnahmeeinheit detektierbar ist. Die um 180° phasenversetzten Felder in den beiden Zellen bilden einen auf wenige Zentimeter begrenzten scharfen Übergang zur Auslöschungszone 7. Bei einer Weiterbewegung des Transponders von seiner Position 3 in eine Position innerhalb der Auslöschungszone 7, etwa in Position 4, sendet der Transponder als Antwortsignal diejenige Impulsfolge, mit der die Information "*Phasenlage unbekannt*" übermittelt wird. Nach ein- oder mehrmaliger Bestätigung dieses Antwortsignales ist dann feststellbar, daß sich der Transponder in der Auslöschungszone 7 und somit im durch die Auslöschungszone 7 eng umrissenen Bereich der Schiebetür 2 befindet. Bei einer Weiterbewegung des Transponders von seiner Position 4 aus der Auslöschungszone 7 heraus in das durch die Felder F₃ und F₄ bereitgestellte gerichtete Feld der außenliegenden Zelle sendet der Transponder Antwortsignale mit der Information "*Phasenlage 180*°" bzw. "*Phasensprung detektiert*". Da der Rand des in der außenliegenden Zelle befindlichen gerichteten Feldes zum Auslöschungsbereich 7 auf wenige Zentimeter scharf begrenzt ist, wird von der Steuer- und Speichereinrichtung bereits zu einem Zeitpunkt, in dem der Transponder gerade aus der Tür herausgetreten ist, erkannt, daß dieser nunmehr das Gebäude verlassen hat. Zur Verifizierung eines solchen ersten, die Feldcharakteristik der außenliegenden Zelle wiedergebenden Signales wird ein Steuersignal von der Steuer- und Speichereinrichtung 4 darstellend, daß sich der Transponder in der äußeren Zelle befindet, erst dann ausgegeben, wenn das Antwortsignal einer vorbestimmten Anzahl entsprechend häufig empfangen worden ist. Das dann ausgegebene Steuersignal kann beispielsweise eine Alarmeinheit beaufschlagen, damit gemeldet wird, daß ein Gegenstand unbefugt aus dem Gebäude entnommen worden ist. Die kurzzyklische Abfrage gestattet eine gesicherte Alarmauslösung bereits zu einem Zeitpunkt, in dem sich der Transponder, wie beispielsweise durch Position 5 gekennzeichnet, noch im sehr türnahen Bereich befindet, so daß die den Transponder (= Warensicherungsetikett) mitführende Person daher noch ergreifbar ist.

Das Aussenden eines Alarmsignales wird jedoch nur dann stattfinden, wenn der Transponder in einem vorangegangenen Identifikationsalgorythmus als nicht freigeschaltet erkannt worden ist.

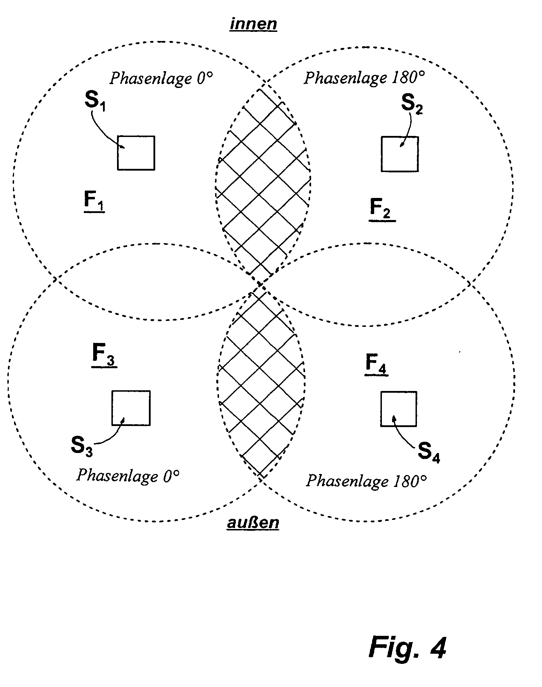

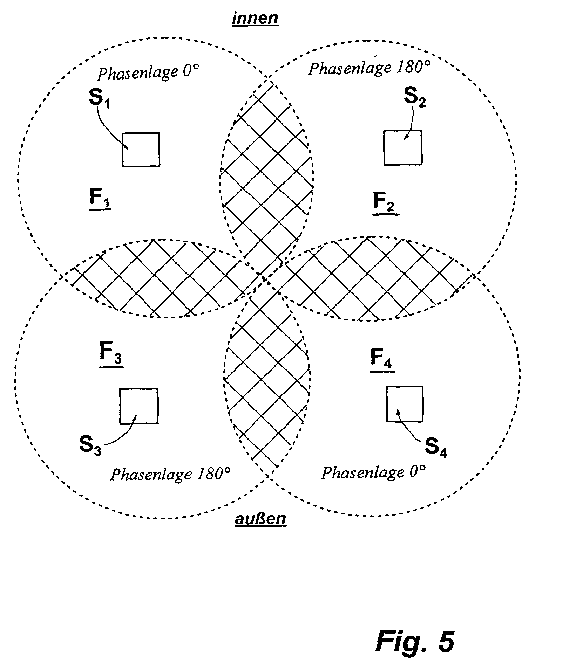

Das geschilderte Verfahren zur ortsaufgelösten Detektion von Transpondern in einem Detektionsbereich im Übergang von einer ersten Zelle in eine zweite Zelle läßt sich zufriedenstellend durchführen, wenn die Transponder in einer solchen Ausrichtung ihrer Antenne durch den Detektionsbereich 1 hindurchgeführt werden, in dem die beschriebenen Feldcharakteristika in der dargestellten Art und Weise von dem Transponder erfaßt werden. Ein Transponder kann bezüglich seiner Antennenanordnung jedoch auch Raumlagen einnehmen, in welchen dieser, obwohl er sich noch in der innenliegenden Zelle des Detektionsbereiches befindet, bereits Signale eines der NF-Sender S₃ oder S₄ der außenliegenden Zelle empfängt, so daß infolge der daraus resultierenden Überlagerung mit dem in der innenliegenden Zelle befindlichen gerichteten Feld von dem Transponder das Antwortsignal "*Phasenlage unbekannt*" gesendet wird. Die Anordnung 1 wird in einen Toggelbetrieb geschaltet, gemäß dem abwechselnd zwischen der in Figur 2 und der in Figur 4 dargestellten Feldausrichtung bzw. zwischen der in Figur 3 und Figur 5 dargestellten Feldausrichtung hin und her geschaltet wird. In dem in Figur 4 gezeigten Sendebetrieb senden die NF-Sender S₁ und S₃ das Sendesignal mit einer Phasenlage 0° und die NF-Sender S₂ und S₄ das Sendesignal mit einer um 180° versetzten Phasenlage. In dieser Ausgestaltung bilden die Felder F₁ und F₃ bzw. F₂ und F₄ gerichtete Felder mit unterschiedlichen Phasenlagen aus. Es wird dann erwartet, daß der Transponder in der Feldausrichtung gemäß Figur 4 einer Phasenlage zuordnenbare Antwortsignale sendet. Bei der in Figur 5 gezeigten Feldanordnung werden die jeweils diagonal gegenüberliegenden NF-Sender S₁ und S₄ bzw. S₂ und S₃ phasengleich betrieben.

Sollte ein Transponder auch im Toggelbetrieb keine eindeutigen Antwortsignale senden, so ist dies unkritisch, da dann davon auszugehen ist, daß der Transponder nicht bewegt wird. Zum Herausbringen des Transponders aus dem Gebäude ist es jedoch notwendig, diesen zu bewegen, so daß dieser bereits nach Änderung der Raumlage seiner Antennenanordnung eindeutige Antwortsignale zu senden vermag und somit detektierbar ist.

Durch Vergleich der einzelnen, aufeinander folgenden, ermittelten Positionen des Transponders mit zuvor bestimmten zellenbezogenen Positionsdaten kann die Bewegungsrichtung des Transponders bestimmt werden. Ist eine solche Bewegungsrichtungsbestimmung auch innerhalb einer Zelle vorgesehen, kann dazu der oben beschriebene Toggelbetrieb verwendet werden, durch den die innenliegende Zelle in zwei Unterzellen, dargestellt durch die Felder F₁ und F₂ und die außenliegende Zelle ebenfalls in zwei Unterzellen darstellt durch die Felder F₃ und F₄ unterteilt werden. Es läßt sich dann feststellen, in welcher Unterzelle sich der Transponder befindet. Zu diesem Zweck können die Felder F₁ bis F₄ bezüglich der Charakteristik ihrer Phasenlage auch rotierend betrieben werden.

In einem weiteren, in den Figuren nicht dargestellten Ausführungsbeispiel ist anstelle der in den Figuren dargestellten Zweiteilung einer Zelle eine Unterteilung einer Zelle in drei Unterzellen vorgesehen. In jeder Unterzelle befindet sich ein NF-Sender als Felderzeugungseinrichtung, wobei die Antennen der Sender so angeordnet sind, daß diese in unterschiedlichen Richtungen abstrahlen. Die drei Sender dieser Zelle werden mit einem um 120° phasenverschobenen Sendesignal beaufschlagt, wobei vorgesehen ist, die Unterzellen bezüglich der zu sendenen Phasenverschiebung rotierend zu betreiben. Die benachbarte Zelle ist ebenso aufgebaut. Die beiden Zellen können phasenverschoben zueinander betrieben werden. Dadurch läßt sich eine genauere Lokalisierung des Transponders innerhalb einer Zelle sowie auch zwischen den Zellen erreichen.

### Zusammenstellung der Bezugszeichen

- 1: Anordnung
- 2: Schiebetür
- 3: Wand
- 4: Steuer- und Speichereinrichtung
- 5: Empfangseinheit
- 6: HF-Empfangsantenne
- 7: Auslöschungszone

- S₁ - S₄: NF-Sender
- F₁ - F₄: Felder

## Patentansprüche

1. Verfahren zum Detektieren eines oder mehrerer Transponder in einem durch zumindest zwei Zellen gegliederten Detektionsbereich, in dem ein Transponder zellenbezogen detektierbar ist, wobei sich zwei benachbarte Zellen unter Ausbildung eines Überlappungsbereiches (7) überlappen, welches Verfahren folgende Schritte umfaßt:
- Bereitstellen eines Feldes (F₁ - F₄) mit einer detektierbaren Feldcharakteristik in jeder Zelle,
- Erfassen der Feldcharakteristik einer ersten Zelle mit einer einem Transponder zugeordneten Aufnahmeeinheit,
- zyklisches Senden eines Antwortsignales von dem Transponder und Empfangen desselben von einer Empfangseinheit, welches Antwortsignal Informationen zur erfaßten Feldcharakteristik, nämlich diejenige des Feldes der ersten Zelle, diejenige des Feldes einer benachbarten Zelle oder eine unbekannte Feldcharakteristik beinhaltet,
- Auswerten des Antwortsignales hinsichtlich der darin enthaltenen Informationen der erfaßten Feldcharakteristik,
- Vergleichen der erfaßten Feldcharakteristik mit den in den Zellen bereitgestellten Feldcharakteristika,
- Bestimmen der möglichen Position(en) des Transponders anhand des durchgeführten Vergleichsergebnisses,
**dadurch gekennzeichnet, dass** im Anschluss an den Schritt der Bestimmung der möglichen Position(en) des Transponders eine Positionsbestimmung verifiziert wird, wobei nach Detektion eines Transponders in der ersten Zelle die Feldcharakteristik einer benachbarten Zelle dergestalt eingestellt wird, daß sich diese von derjenigen der ersten Zelle unterscheidet.

2. Verfahren nach Anspruch 1, **dadurch gekennzeichnet, daß** die Verifizierung einer Positionsbestimmung eines Transponders durch Vergleichen der Information des aktuell empfangenen Antwortsignales mit derjenigen des zuvor empfangenen Antwortsignales durchgeführt wird, wobei eine Positionsbestimmung dann als der tatsächlichen entsprechend angesehen wird, wenn zumindest zwei aufeinanderfolgende Antwortsignale dieselbe Feldcharakteristikinformation beinhalten.

3. Verfahren nach Anspruch 1 oder 2, **dadurch gekennzeichnet, daß** die Verifizierung einer Positionsbestimmung eines Transponders durch vorbestimmtes Ändern der Feldcharakteristik in dieser Zelle und Empfangen eines entsprechenden Antwortsignales erfolgt.

4. Verfahren nach einem der Ansprüche 1 bis 3, **dadurch gekennzeichnet, daß** die Felder (F₁ - F₄) durch eine niederfrequente elektromagnetische, in allen Zellen gleichfrequente und synchrone Strahlung gebildet werden, wobei die Felder (F₁ - F₄) zur Unterscheidung der Zellen bezüglich ihrer Phasenlage unterschiedlich einstellbar sind, so daß von dem Transponder bei einem Eintreten in bezüglich ihrer Phasenlage unterschiedliche Felder diese durch Phasenlagenunterschiede detektierbar sind.

5. Verfahren nach Anspruch 4, **dadurch gekennzeichnet, daß** die Phasenlage in einem in einer Zelle enthaltenen Feld zur Herbeiführung einer Unterscheidung zu einer anderen Zelle um 180° geändert wird.

6. Verfahren nach einem der Ansprüche 1 bis 5, **dadurch gekennzeichnet, daß** die beiden Zellen in jeweils zumindest zwei Unterzellen unterteilt werden, in denen in einem ersten Detektionsschritt jeweils phasengleiche Felder (F₁, F₂; F₃, F₄) erzeugt werden und in einem weiteren Schritt die in den Unterzellen befindlichen Felder (F₁ - F₄) bezüglich der zu detektierenden Feldcharakteristik unterschiedlich zueinander eingestellt werden und daß die Feldcharakteristika in diesen Unterzellen zwischen den beiden Betriebsarten toggeln.

7. Verfahren nach einem der Ansprüche 1 bis 6, **dadurch gekennzeichnet, daß** das Antwortsignal des Transponders auf einer HF-Strecke gesendet wird.

8. Verfahren nach einem der Ansprüche 1 bis 7, **dadurch gekennzeichnet, daß** als Antwortsignale des Transponders zeitcodierte Impulse verwendet werden, wobei ein Antwortsignal aus einem oder mehreren gleich oder unterschiedlich langen Impulsen besteht.

9. Verfahren nach einem oder mehreren der Ansprüche 1 bis 8, **dadurch gekennzeichnet, daß** bei einem Einsatz von mehreren Transpondern jedem Transponder innerhalb einer vorgegebenen Zeiteinheit ein Zeitschlitz zugeordnet wird, an welchen Zeitschlitz das zyklische Senden des Antwortsignales des Transponders gekoppelt ist und innerhalb welchem die Antwort dieses Transponders empfangen wird.

10. Anordnung zum Detektieren eines oder mehrerer Transponder in einem durch zumindest zwei Zellen gegliederten Detektionsbereich, in dem ein Transponder zellenbezogen detektierbar ist, bei welcher Anordnung (1) jeder Zelle eine ortsfeste Felderzeugungseinrichtung (S₁ - S₄) zum Erzeugen eines Feldes (F₁ - F₄) mit einer detektierbaren Feldcharakteristik zugeordnet ist, welche Zellen bzw. welche sich in den Zellen befindlichen Felder (F₁ - F₄) sich bereichsweise überlappen, wobei die Felderzeugungseinrichtungen (S₁ - S₄) bezüglich der Feldcharakteristik der von diesen bereitgestellten Feldern (F₁ - F₄) sowohl mit gleicher Feldcharakteristik als auch mit unterschiedlicher Feldcharakteristik zueinander betreibbar sind, **dadurch gekennzeichne**t**, daß** die Feldcharakteristik eines in einer Zelle befindlichen Feldes geändert wird, wenn in der benachbarten Zelle das Vorhandensein eines Transponders detektiert worden ist, welche Anordnung (1) ferner eine einem Transponder zugeordnete Aufnahmeeinheit zum Erfassen von Änderungen der zu detektierenden Feldcharakteristik und eine dem Transponder zugeordnete Sendeeinheit zum Senden von Antwortsignalen umfaßt, und welcher Anordnung (1) eine Empfangseinheit (5) zum Empfangen der Antwortsignale und eine Steuer- und Speichereinrichtung (4) zugeordnet ist, an der die Felderzeugungseinrichtungen (S₁ - S₄) und die Empfangseinheit (5) angeschlossen sind.

11. Anordnung nach Anspruch 10, **dadurch gekennzeichnet, daß** die in den Zellen befindlichen, von den Felderzeugungseinrichtungen (S₁ - S₄) bereitgestellten Felder (F₁ - F₄) niederfrequent, gleichfrequent und synchron gesendet sind, welche Felderzeugungseinrichtungen (S₁ - S₄) phasenunterschiedlich beaufschlagbar sind, und die einem Transponder zugeordnete Aufnahmeeinheit zum Erfassen von sich als unterschiedliche Phasenlagen bemerkbar machenden Änderungen dieser Feldcharakteristik ausgelegt ist.

12. Anordnung nach Anspruch 11, **dadurch gekennzeichnet, daß** die Phasenlagen der in den Zellen enthaltenen Feldern um 180° versetzt zueinander sind.

13. Anordnung nach Anspruch 12, **dadurch gekennzeichnet, daß** eine Zelle des Detektionsbereichs in zwei oder mehr, sich überlappende Unterzellen unterteilt ist, denen jeweils eine eigene Felderzeugungseinrichtung (S₁ - S₄) zugeordnet sind, so daß die in den Unterzellen befindlichen Felder (F₁ - F₄) bezüglich der zu detektierenden Feldcharakteristik unterschiedlich zueinander einstellbar sind.

14. Anordnung nach einem der Ansprüche 10 bis 13, **dadurch gekennzeichnet, daß** die dem Transponder zugeordnete Sendeeinheit und die an die Steuer- und Speichereinrichtung (4) angeschlossene Empfangseinheit (5) im Hochfrequenzbereich arbeitet.

15. Anordnung nach einem der Ansprüche 10 bis 14, **dadurch gekennzeichnet, daß** die Zellen des Detektionsbereichs in drei, sich überlappende Unterzellen unterteilt sind, denen jeweils eine eigene Felderzeugungseinrichtung zugeordnet ist, deren Antennen in unterschiedliche Richtungen abstrahlend vorgesehen sind, welche drei Unterzellen einer Zelle bezüglich ihrer Feldcharakteristik rotierend betrieben werden.

16. Anordnung nach Anspruch 15, **dadurch gekennzeichnet, daß** benachbarte Zellen phasenverschoben zueinander betrieben werden.

17. Verwendung einer Anordnung nach einem der Ansprüche 10 bis 16 zum Detektieren der Position eines als Warensicherungsetikett dienenden Transponders im Ausgangsbereich eines Gebäudes zur Bestimmung, ob sich dieser noch innerhalb des Gebäudes oder bereits außerhalb des Gebäudes befindet, wobei der Detektionsbereich der Anordnung mit einer Zelle im Gebäudeinneren und mit einer weiteren, sich mit dieser Zelle bereichsweise überlappenden Zelle außerhalb des Gebäudes und der Überlappungsbereich der beiden Zellen den Türbereich des Gebäudes abdeckend angeordnet ist.

## Claims

1. Method of detecting one or more transponders in a detection region, which is structured into at least two cells, and in which a transponder is detectable with reference to the cells, two adjacent cells overlapping to form an overlap region (7), which method includes the following steps:
- providing in each cell a field (F₁ - F₄) with a detectable field characteristic;
- acquiring the field characteristic of a first cell using a pick-up unit associated with a transponder;
- cyclically transmitting a response signal from the transponder and receiving the same from a receiving unit, which response signal contains information regarding the acquired field characteristic, namely that of the field of the first cell, that of the field of an adjacent cell or an unknown field characteristic;
- evaluating the response signal with respect to the information of the acquired field characteristic contained therein;
- comparing the acquired field characteristic with the field characteristics provided in the cells; and
- determining the possible position(s) of the transponder on the basis of the result of the performed comparison;
**characterised in that**, subsequent to the step of determining the possible position(s) of the transponder, a position determination is verified, whereby, after the detection of a transponder, in the first cell, the field characteristic of an adjacent cell is adjusted such that it differs from that of the first cell.

2. Method according to claim 1, **characterised in that** the verification of a position determination of a transponder is carried out by comparing the information of the currently received response signal with that of the previously received response signal, a position determination then being considered to correspond to the actual one if at least two successive response signals contain the same field characteristic information.

3. Method according to claim 1 or 3, **characterised in that** the verification of a position determination of a transponder takes place through the predetermined changing of the field characteristic in this cell and reception of a corresponding response signal.

4. Method according to one of claims 1 to 2, **characterised in that** the fields (F₁ - F₄) are formed by a low-frequency electromagnetic radiation of the same frequency and synchronous in all cells, the fields (F₁ - F₄) being differently adjustable for the differentiation of the cells with respect to their phase position so that, upon the transponder entering fields, differing with respect to their phase position, said fields can be detected through phase position differences.

5. Method according to claim 4, **characterised in that** the phase position in a field contained in a cell is changed by 180° in order to bring about a differentiation against another cell.

6. Method according to one of claims 1 to 5, **characterised in that** each of the two cells is divided into at least two sub-cells in which, in a first detection step, in each instance same-phase fields (F₁, F₂; F₃, F₄) are generated and, in a further step, the fields (F₁ - F₄) located in the sub-cells are adjusted to differ from one another, with respect to the field characteristic to be detected, and **in that** the field characteristics in these sub-cells toggle between the two operating modes.

7. Method according to one of claims 1 to 6, **characterised in that** the response signal of the transponder is transmitted on an HF channel.

8. Method according to one of claims 1 to 7, **characterised in that** time-coded pulses are used as the response signals of the transponder, one response signal comprising one or more pulses of identical or different lengths.

9. Method according to one or more of claims 1 to 8, **characterised in that**, if several transponders are used, each transponder is associated with a time slot within a given time unit, to which time slot the cyclical transmission of the response signal of the transponder is coupled, and within which time slot the response of this transponder is received.

10. Arrangement for detecting one or more transponders in a detection region, which is structured into at least two cells, and in which a transponder is detectable with reference to the cells, in which arrangement (1) each cell is associated with a stationary field-generating device (S₁ - S₄) for generating a field (F₁ - F₄) with a detectable field characteristic, which cells or respectively which fields (F₁ - F₄), located in the cells, overlap in various regions, the field-generating devices (S₁ - S₄) with respect to the field characteristic of the fields (F₁ - F₄), provided by said devices, being operable relative to one another both with the same field characteristic and with a different field characteristic, **characterised in that** the field characteristic of a field located in a cell is changed when the provision of a transponder has been detected in the adjacent cell, which arrangement (1) also includes a receiving unit, associated with a transponder, for acquiring changes in the field characteristic to be detected, and a transmitting unit, associated with the transponder, for transmitting response signals, and which arrangement (1) has associated therewith a receiving unit (5) for receiving the response signals and a control and memory device (4), to which are connected the field-generating devices (S₁ - S₄) and the receiving unit (5).

11. Arrangement according to claim 10, **characterised in that** the fields (F₁ - F₄), located in the cells and provided by the field-generating devices (S₁ - S₄), are transmitted at low frequency, at the same frequency and synchronously, which field-generating devices (S₁ - S₄) can be impressed with different phases, and the pick-up unit, associated with a transponder, is designed to acquire changes of this field characteristic which manifest as different phase positions.

12. Arrangement according to claim 11, **characterised in that** the phase positions of the fields contained in the cells are offset by 180° with respect to one another.

13. Arrangement according to claim 12, **characterised in that** one cell of the detection region is divided into two or more overlapping sub-cells with a separate field-generating device (S₁ - S₄) associated with each sub-cell so that the fields (F₁ - F₄), located in the sub-cells, can be adjusted so as to differ from each other with respect to the field characteristic to be detected.

14. Arrangement according to one of claims 10 to 13, **characterised in that** the transmitting unit, associated with the transponder, and the receiving unit (5), connected to the control and memory device (4), operate in the high-frequency range.

15. Arrangement according to one of claims 10 to 14, **characterised in that** the cells of the detection region are divided into three overlapping sub-cells with a separate field-generating device associated with each sub-cell and having antennas adapted to radiate in different directions, which three sub-cells of one cell are operated in rotation with respect to their field characteristic.

16. Arrangement according to claim 15, **characterised in that** adjacent cells are operated in phase shift with respect to one another.

17. Use of an arrangement according to one of claims 10 to 16 for detecting the position of a transponder, which serves as a security tag for safeguarding goods, in the exit region of a building in order to determine whether said transponder is still within the building or already outside the building, the detection region of the arrangement being disposed with a cell in the interior of the building and with an additional cell, overlapping in various regions with the former cell, outside the building, and the overlap region of the two cells being disposed so as to cover the door area of the building.

## Revendications

1. Procédé pour détecter un ou plusieurs transpondeurs dans une zone de détection subdivisée en au moins deux cellules, dans laquelle un transpondeur est détectable en fonction de la cellule, deux cellules voisines se recoupant en formant une zone de recoupement (7), lequel procédé comporte les étapes suivantes :
- Mise à disposition d'un champ (F₁ - F₄) avec une caractéristique de champ détectable dans chaque cellule,
- Interception de la caractéristique de champ d'une première cellule au moyen d'une unité d'enregistrement affectée à un transpondeur,
- Emission cyclique d'un signal de réponse par le transpondeur et réception dudit signal de réponse par une unité de réception, lequel signal de réponse contient des informations au sujet de la caractéristique de champ interceptée, à savoir celle du champ de la première cellule, celle du champ de la cellule voisine ou une caractéristique de champ inconnue,
- Exploitation du signal de réponse afin de déterminer l'information de la caractéristique de champ interceptée qu'il contient,
- Comparaison de la caractéristique de champ interceptée avec les caractéristiques de champ mises à disposition dans les cellules,
- Détermination de la ou des positions possibles du transpondeur au moyen des résultats obtenus à l'issue de la comparaison,
**caractérisé en ce que**, dans la continuité de l'étape consistant à déterminer la ou les positions possibles du transpondeur, la détermination de la position est vérifiée, la caractéristique de champs d'une cellule voisine étant, après détection d'un transpondeur dans la première cellule, réglée de telle sorte que la précédente se distingue de la première cellule.

2. Procédé selon la revendication 1 **caractérisé en ce que** la vérification d'une détermination de position d'un transpondeur est réalisée par comparaison de l'information du signal de réponse qui vient d'être réceptionné avec celle du signal de réponse réceptionné auparavant, la détermination de position étant considérée comme conforme à la position réelle lorsque qu'au moins deux signaux de réponse consécutifs contiennent la même information relative à la caractéristique de champ.

3. Procédé selon la revendication 1 ou 2 **caractérisé en ce que** la vérification d'une détermination de position d'un transpondeur s'effectue par une modification prédéfinie de la caractéristique de champ dans cette cellule et par réception d'un signal de réponse correspondant.

4. Procédé selon l'une des revendications 1 à 3 **caractérisé en ce que** les champs (F₁ - F₄) sont formés par un rayonnement électromagnétique à basses fréquences, synchrone et de même fréquence dans toutes les cellules, les champs (F₁ - F₄) étant réglables différemment afin de différencier les cellules en ce qui concerne leur position de phase, de sorte que le transpondeur, lorsqu'il pénètre dans des champs différents en ce qui concerne leur position de champ, détecte ces champs par leurs différences de position de phase.

5. Procédé selon la revendication 4 **caractérisé en ce que** la position de phase d'un champ contenu dans une cellule est modifiée de 180° afin d'obtenir une différenciation par rapport à une autre cellule.

6. Procédé selon l'une des revendications 1 à 5 **caractérisé en ce que** les deux cellules sont subdivisées en au moins deux sous-cellules, dans lesquelles les champs de phase identique (F₁, F₂, F₃, F₄) sont générés au cours d'une première étape de détection et où, au cours d'une seconde étape, les champs (F₁ - F₄) se trouvant dans les différentes sous-cellules peuvent être réglables différemment les uns par rapport aux autres en ce qui concerne la caractéristique de champ à détecter et **en ce que** les caractéristiques de champ dans ces sous-cellules basculent entre les deux modes de fonctionnement.

7. Procédé selon l'une des revendications 1 à 6 **caractérisé en ce que** le signal de réponse du transpondeur est émis sur une voie HF.

8. Procédé selon l'une des revendications 1 à 7 **caractérisé en ce que** l'on utilise en guise de signaux de réponse du transpondeur, des impulsions à codage temporel, un signal de réponse étant constitué d'une ou de plusieurs impulsions de durée identique ou différente.

9. Procédé selon une ou plusieurs des revendications 1 à 8 **caractérisé en ce que** l'on affecte, lors de l'utilisation de plusieurs transpondeurs, un créneau temporel à chaque transpondeur, dans les limites d'une unité de temps prédéterminée, lequel créneau temporel est couplé à l'émission cyclique d'un signal de réponse du transpondeur et dans l'intervalle duquel la réponse de ce transpondeur est réceptionnée.

10. Dispositif pour détecter un ou plusieurs transpondeurs dans une zone de détection subdivisée en au moins deux cellules, dans laquelle un transpondeur est détectable en fonction de la cellule, dans lequel dispositif (1) un équipement générateur de champ (S₁ - S₄) fixe pour générer un champ (F₁ - F₄) est affecté à chaque cellule, lesquelles cellules, en l'occurrence lesquels champs (F₁ - F₄) se trouvant dans ces cellules se recoupent par zones, les équipements générateurs de champs (S₁ - S₄) pouvant fonctionner, en ce qui concerne la caractéristique des champs (F₁ - F₄) mis à disposition par ces derniers, indifféremment avec la même caractéristique de champ ou avec une caractéristique de champ différente des autres, **caractérisé en ce que** la caractéristique d'un champ se trouvant dans une cellule est modifiée lorsque la présence d'un transpondeur a été détecté dans la cellule voisine, lequel dispositif (1) comprend par ailleurs une unité d'enregistrement affectée à un transpondeur afin d'intercepter les modifications de la caractéristique de champ à détecter et une unité d'émission affectée au transpondeur pour émettre des signaux de réponse et auquel dispositif (1) sont affectés une unité de réception (5) pour réceptionner les signaux de réponse et un équipement de commande et de mémorisation (4) à laquelle sont raccordés l'équipement générateur de champ (S₁ - S₄) et l'unité de réception (5).

11. Dispositif selon la revendication 10 **caractérisé en ce** les champs (F₁ - F₄) se trouvant dans les cellules et mis à disposition par les équipements générateurs de champs (S₁ - S₄) sont émis à basse fréquence, à la même fréquence et de manière synchrone, auxquels équipements générateurs de champs (S₁ - S₄) des phases différentes peuvent être transmises, et l'unité d'enregistrement affectée à un transpondeur est conçue pour intercepter les modifications de cette caractéristique de champ qui se manifestent par différentes positions de phase.

12. Disposition selon la revendication 11, **caractérisé en ce que** les positions de phase des champs contenus dans les cellules sont décalées de 180° les unes par rapport aux autres.

13. Dispositif selon la revendication 12 **caractérisé en ce qu'**une cellule de la zone de détection est subdivisée en deux ou plus sous-cellules se recoupant, auxquelles est affecté individuellement un équipement générateur de champ (S₁ - S₄) de sorte que les champs (F₁ - F₄) se trouvant dans les sous-cellules sont réglables différemment les uns par rapport aux autres en ce qui concerne la caractéristique de champ à détecter.

14. Dispositif selon l'une des revendications 10 à 13 **caractérisé en ce que** l'unité d'émission affectée au transpondeur et l'unité de réception (5) raccordée à l'équipement de commande et de mémorisation (4), fonctionnent dans une zone à hautes fréquences.

15. Dispositif selon l'une des revendications 10 à 14 **caractérisé en ce que** les cellules de la zone de détection sont subdivisées en trois sous-cellules se recoupant, auxquelles est affecté individuellement un équipement générateur de champ, dont les antennes sont prévues pour rayonner dans différentes directions, lesquelles trois sous-cellules d'une cellule fonctionnent de manière rotative en ce qui concerne leur caractéristique de champ.

16. Dispositif selon la revendication 15 **caractérisé en ce que** des cellules voisines fonctionnent avec un décalage de phase l'une par rapport à l'autre.

17. Utilisation d'un dispositif selon l'une des revendications 10 à 16 pour détecter la position d'un transpondeur faisant office d'étiquette anti-vol dans la zone de sortie d'un bâtiment afin de déterminer si celui-ci se trouve encore à l'intérieur du bâtiment ou s'il est déjà en dehors du bâtiment, la zone de détection du dispositif étant disposée avec une cellule à l'intérieur du bâtiment et une autre cellule, qui se recoupe dans une zone avec cette cellule hors du bâtiment et la zone de recoupement des deux cellules étant disposée pour couvrir la zone de la porte du bâtiment.
